# EUROPÄISCHE PATENTSCHRIFT

(11) **EP 2 852 017 B1**
(45) Veröffentlichungstag und Bekanntmachung des Hinweises auf die Patenterteilung: **22.04.2020**
(21) Anmeldenummer: 14401087.3
(22) Anmeldetag: 06.08.2014
(51) Int. Cl.: H02G 3/12

(54) **Installationsdose für elektrotechnische Zwecke**
Installation socket for electro-technical purposes
Boîtier d'installation à des fins électrotechniques

(30) Priorität: 19.09.2013 DE 102013110319
(43) Veröffentlichungstag der Anmeldung: 25.03.2015
(73) Patentinhaber: Kaiser GmbH & Co. KG, 58579 Schalksmühle (DE)
(72) Erfinder: Kaiser, Burkard, 58509 Lüdenscheid (DE)
(74) Vertreter: Köchling, Conrad-Joachim

(56) Entgegenhaltungen:
- EP-A2- 0 700 119
- EP-A2- 2 360 800
- WO-A1-03/058786
- WO-A1-2008/023102
- WO-A1-2012/074444
- DE-U1- 20 103 739
- FR-A1- 2 811 817

## Beschreibung

Die Erfindung betrifft eine Installationsdose für elektrotechnische Zwecke zum Einbau in eine Wand mit einem mündungsseitig offenen Dosenkörper, wobei ein Hilfsrahmen angeordnet ist, der die Aufnahme und Halterung für ein in den Dosenkörper einbaubares Installationsgerät und/oder einen Tragring dafür ist, wobei der Hilfsrahmen in Richtung auf einen Boden des Dosenkörpers und in Richtung zur Mündung des Dosenkörpers verstellbar und in unterschiedlichen Positionen feststellbar gehalten ist.

Aus der AT 233 645 B ist eine Unterputzdose bekannt. Aus der DE 201 03 739 U1 ist ein elektrisches Installationsgerät mit einer Unterputzdose bekannt, wobei hierbei vor den Mündungsrand des Dosenkörpers ein Hilfsrahmen gesetzt ist, der die Aufnahme und Halterung für ein in den Dosenkörper einbaubares Installationsgerät oder ein Tragring dafür ist.

Aus der WO 03/058786 A1 ist ein elektrisches Installationsgerät bekannt, bei dem ebenfalls vor die Mündung einer Dose ein Hilfsrahmen gesetzt ist.

Aus der WO 2008/023102 A1 ist eine Installationsdose anderer Bauart bekannt.

Aus der EP 0 700 119 A2 ist eine Unterputzinstallationsdose bekannt. Eine weitere Installationsdose ist aus der EP 2 360 800 A2 bekannt.

Aus der FR 2 811 817 A1 ist eine Installationsdose bekannt, die in eine Maueröffnung einsetzbar und einbaubar ist, wobei die Einbaudose in eine wandseitig eingebauten Topf einbaubar ist.

Installationsdosen dieser Art sind im Stand der Technik vielfach bekannt. Zum Stand der Technik wird beispielsweise auf die AT 233645 B verwiesen.

Installationsdosen sind in unterschiedlicher Ausgestaltung im Stand der Technik bekannt. Beispielsweise sind solche Installationsdosen als Unterputzinstallationsdosen ausgebildet, wie in der angegebenen Druckschrift beschrieben. Auch sind Installationsdosen bekannt, die als Hohlwanddosen beschrieben werden und die zum Einbau in eine Einbauöffnung einer Hohlwand bestimmt sind. In jedem Falle weist die entsprechende Wand einen Einbauraum für eine Installationsdose auf. Beispielsweise kann bei Unterputzinstallationsdosen ein entsprechendes Sackloch in der Wandung ausgebildet werden oder aber bei Hohlwanddosen wird in der Hohlwand ein Ausschnitt ausgeschnitten, dessen Querschnitt dem Querschnitt der Installationsdose entspricht, sodass die Installationsdose in den Ausschnitt eingesetzt werden kann.

Nach dem Einbau solcher Installationsdosen in entsprechende Wandöffnungen ist es üblich, dass die entsprechende Wand samt eingesetzter Installationsdose mit einer Putzschicht versehen wird, sodass die Installationsdose hinter der Außenfläche mit ihrer Mündung zurückliegt, die durch die Putzschicht gebildet ist.

Um Installationsgeräte, beispielsweise Schalter, Tastschalter, Steckdosen oder dergleichen in solche Installationsdosen einbauen zu können, sind Tragringe bekannt, die mit einem entsprechenden Schalter, Taster, einer Steckdose oder dergleichen kombiniert werden. Diese Einbaueinheit wird dann in die Installationsdose eingesetzt, sodass der Tragring außen auf dem Mündungsrand der Installationsdose und/oder der Putzschicht, die gegenüber der Mündung der Installationsdose vorsteht, aufliegt. Die Lagesicherung des Installationsgerätes in der Installationsdose erfolgt beispielsweise dadurch, dass am Tragring Spreizkrallen angeordnet sind, welche mittels von der Vorderseite des Tragringes her zugänglicher Schrauben angezogen werden können, sodass die Spreizkrallen gegen den Mantel der Installationsdose angezogen werden und somit ein sicherer Sitz des Installationsgerätes in der Installationsdose erreicht wird. Um den Tragring an der Mündung der Installationsdose befestigen zu können, ist es außerdem bekannt, dass der Tragring schlüssellochartige Ausnehmungen aufweist, die von Befestigungsschrauben durchgriffen sind, die in das Installationsgerät eingeschraubt werden. Schließlich wird auf eine solche Anordnung eine Abdeckplatte aufgebracht und in geeigneter Weise am Installationsgerät oder am Tragring befestigt.

Eine solche Ausgestaltung ist zwar zweckmäßig und auch brauchbar, jedoch besteht ein Problem darin, dass der Überstand des Installationsgerätes über die Außenfläche der Wand relativ groß ist, weil an der Außenfläche der Tragring und die Abdeckplatte anliegt, die gegenüber der Wandfläche vorragen.

Insbesondere Anordnungen, bei denen aus Designgründen eine nahezu flächenbündige Anordnung der Abdeckplatte ermöglicht sein soll, sind mit solchen Konstruktionen nicht realisierbar.

Ausgehend von diesem Stand der Technik liegt der Erfindung die Aufgabe zugrunde, eine Installationsdose gattungsgemäßer Art zu schaffen, die eine nahezu flächenbündige Anordnung einer Abdeckplatte bei einer entsprechenden Installationsdose ermöglicht, wobei ein Überstand durch einen Tragring oder sonstige Teile des Installationsgerätes vermieden ist.

Zur Lösung der Aufgabe schlägt die Erfindung vor, dass der Hilfsrahmen in dem Dosenkörper gehalten ist, dass in den Dosenkörper ein dessen Innenabmessung oder Innendurchmesser angepasster Tragring eingesetzt ist, der auf der Mündung des Hilfsrahmens oder dessen Kragen aufliegt, und dass am Hilfsrahmen Stellmittel gehalten sind, die mit Stellmittelaufnahmen am Innenmantel des Dosenkörpers in Eingriff sind und mittels derer die Verstellung und Feststellung in unterschiedlichen Positionen realisiert ist, wobei die Stellmittel Kopfschrauben sind.

Durch eine solche Ausgestaltung ist es ermöglicht, dass die relative Einbautiefe des Hilfsrahmens zum Dosenkörper der Installationsdose variabel ist, sodass die Einbautiefe an den örtlich vorliegenden Sollzustand angepasst werden kann.

Die Anpassung der Einbautiefe des Hilfsrahmens relativ zum Dosenkörper kann beispielsweise durch eine gewindemäßige Verstellung der Teile zueinander oder auch durch Rastung der Teile in unterschiedlichen Stellungen realisiert werden.

Ist beispielsweise die Putzschicht, die nach Einsetzen der Installationsdose in die entsprechende Wandöffnung aufgebracht wird, relativ dick, so kann der Hilfsrahmen samt damit verbundener Teile weiter zur von der Wand gebildeten Außenfläche hin verschoben werden. Bei dünneren Putzschichten ist es möglich, den Hilfsrahmen im Dosenkörper tiefer zu versenken.

In jedem Falle wird eine Einbausituation erreicht, bei der weder Bestandteile des Hilfsrahmens noch der daran befestigten Elemente mit Ausnahme einer möglicherweise vorhandenen Abdeckplatte oder dergleichen über die von der Wandung aufgespannte Ebene vorragen.

Der Dosenkörper kann beliebigen Querschnitt haben, beispielsweise polygonal, insbesondere quadratisch, wobei der Hilfsrahmen vorzugsweise der Querschnittsform angepasst ist.

In an sich bekannter Weise ist bevorzugt vorgesehen, dass der Dosenkörper kreisrunden Querschnitt hat.

Auch ist in an sich bekannte Weise vorgesehen, dass der Dosenkörper zylindrisch mit umlaufendem Mantel ausgebildet ist.

Installationsdosen mit kreisrundem Querschnitt und auch mit zylindrischem Mantel sind im Stand der Technik bekannt. Solche Installationsdosen sind Vorbild für die Installationsdose erfindungsgemäßer Art, wobei die erfindungsgemäße Installationsdose im Durchmesser größer als herkömmliche Installationsdosen ausgebildet ist, damit in der Installationsdose gemäß der Erfindung der Hilfsrahmen, die elektrischen Installationsgeräte und der Tragring versenkt angeordnet werden können.

Dabei können insbesondere handelsübliche Installationsgeräte und gegebenenfalls sogar handelsübliche Tragringe verwendet werden, da der Durchmesser der erfindungsgemäßen Installationsdose entsprechend größer und den Zweckbestimmungen der Erfindung angepasst bemessen ist.

Zudem kann vorgesehen sein, dass der Dosenkörper mündungsseitig quer zu seiner Längserstreckung nach außen abragende Gegenflächen aufweist, die in Einbausolllage an der Wandaußenseite neben der Einbauöffnung anliegen.

Auch kann besonders bevorzugt vorgesehen sein, dass der Dosenkörper mündungsseitig außen umlaufend als Gegenlagerfläche einen Kragen oder Flanschrand aufweist.

Solche Ausgestaltungen dienen dazu, die Installationsdose in einfacher Art und Weise in eine Wandöffnung einsetzen zu können, wobei die Gegenlagerflächen bzw. der umlaufende Kragen eine Einstecktiefenbegrenzung für die Installationsdose bilden. Der Kragen und die Gegenlagerflächen sind im Mündungsbereich der Installationsdose vorgesehen, sodass die Installationsdose nicht über den Flanschrand bzw. über die Gegenlagerflächen nach außen vorragt. Nach Auftragen einer Putzschicht oder dergleichen auf die Wandfläche sind die Gegenlagerflächen von dieser überdeckt.

Insbesondere bei Einsatz der Installationsdose als Hohlwanddose dient der umlaufende Kragen bzw. dienen die an der Mündung vorgesehenen Gegenlagerflächen als Widerlager beim Anziehen der Befestigungsmittel zum Festsetzen der Hohlwanddose in dem Ausschnitt der Hohlwand.

Es ist zudem vorzugsweise vorgesehen, dass der Hilfsrahmen als Ringkörper ausgebildet ist, von dem am der Mündung des Dosenkörpers zugewandten Endbereich ein Kragen quer nach außen abragt.

Der Ringkörper hat eine ausreichende Höhe, wie es seiner Zweckbestimmung entspricht. Der am einen Ende des Ringkörpers vorgesehene Kragen ist bei der Anordnung der Befestigungsmittel für die einzelnen Elemente vorteilhaft, insbesondere der Mittel, mittels derer der Hilfsrahmen in dem Dosenkörper verstellbar gehalten ist.

Vorzugsweise kann vorgesehen sein, dass der Kopf der als Kopfschrauben ausgebildeten Stellmittel jeweils in einem am Außenmantel des Hilfsrahmens ausgebildeten Käfig drehbar, aber axial unverstellbar gehalten ist und deren Gewindeschaft in einen die Stellmittelaufnahme bildenden Kanal am Innenmantel des Dosenkörpers eingeschraubt ist.

Die Anordnung der Stellmittel ist vorzugsweise am Außenmantel des Hilfsrahmens vorgesehen, wobei zum Zugriff zu den Stellmitteln der Kragen über die Stellmittel zwar radial vorragt, im Bereich der Stellmittel aber Ausnehmungen aufweist, die beispielsweise mit einem Werkzeug durchgreifbar sind. Am Innenmantel der Installationsdose sind im Bereich der am Hilfsrahmen angeordneten Stellmittel entsprechende Stellmittelaufnahmen ausgebildet, in die die Stellmittel in der Sollposition eingreifen und mittels derer die Verstellung des Hilfsrahmens in unterschiedlichen Positionen relativ zur Installationsdose ermöglicht ist. Vorzugsweise sind die Stellmittel Kopfschrauben, deren Kopf jeweils in einem am Außenmantel des Hilfsrahmens ausgebildeten Käfig drehbar gehalten ist, aber axial unverstellbar, sodass durch Drehung der Kopfschrauben die Einschraubtiefe des Gewindeschaftes in den Kanal am Innenmantel der Installationsdose variabel ist. Beim Drehen der Kopfschraube und entsprechendem gewindebedingten Einschrauben oder Herausschrauben aus der Installationsdose wird der Hilfsrahmen mitbewegt und auf das entsprechende Niveau eingestellt.

Des Weiteren ist bevorzugt vorgesehen, dass der Hilfsrahmen am Innenmantel Kanäle, die parallel zu einer Mittellängsachse des Hilfsrahmens ausgerichtet sind, aufweist, und dass Haltemittel, insbesondere Kopfschrauben, in diese einschraubbar oder eingeschraubt sind, mittels derer ein Installationsgerät oder ein Tragring, der ein Installationsgerät hält, am Hilfsrahmen befestigt oder befestigbar ist.

Durch diese Ausgestaltung ist es in einfacher Weise möglich, einen Tragring, gegebenenfalls einen Tragring mit Installationsgerät, oder auch ein Installationsgerät im Hilfsrahmen zu fixieren, sodass diese Elemente gemeinsam mit dem Hilfsrahmen relativ zur Installationsdose hinsichtlich der Einbautiefe variabel sind.

Auch kann bevorzugt sein, dass der Dosenkörper als Hohlwanddose ausgebildet ist, an deren Mantel ein- und ausschwenkbare Laschen angeordnet sind, die mittels in Kanäle des Dosenkörpers eingesetzter Laschenschrauben betätigbar und in ausgeschwenkter Lage längs des Mantels in Richtung zur Mündung verstellbar sind.

Solche Ausgestaltungen sind bei Hohlwanddosen an sich bekannt.

Eine bevorzugte Weiterbildung wird zudem darin gesehen, dass am Hilfsrahmen an seiner zur Mündung weisenden Seite parallel zur Stellrichtung mindestens ein vorragender Steg angeordnet ist.

Durch den am Hilfsrahmen zur Mündung ragenden Steg kann der Monteur, der die Installationsdose samt Hilfsrahmen und dergleichen installiert, in einfacher Weise die Einbautiefe des Hilfsrahmens relativ zur außenliegenden Wandoberfläche erkennen und einstellen, in dem nämlich die vorragenden Stege bei Verstellung des Hilfsrahmens relativ zur Installationsdose dann die gewünschte Einbautiefe anzeigen, wenn die freien Stegenden in der von der Wand oder der darauf befindlichen Putzschicht aufgespannten Bezugsebene liegen.

Um eine entsprechende Montagehilfe zu bieten, sind vorzugsweise mehrere gleichlange Stege vorgesehen, beispielsweise 3 oder 4 gleichmäßig auf den Umfang des Hilfsrahmens verteilt.

Eine mögliche Variante wird darin gesehen, dass der Hilfsrahmen als mündungsseitig offener Dosenkörper ausgebildet ist.

Es ist nicht zwingend erforderlich, dass der Hilfsrahmen als offener Ringkörper ausgebildet ist. Der Hilfsrahmen könnte auch als offener Dosenkörper ausgebildet sein, der dazu bestimmt und dazu geeignet ist, entsprechende Installationsgeräte aufzunehmen. Hierbei muss lediglich eine Anpassung insoweit vorgenommen werden, als beispielsweise in der Installationsdose vorgesehene Sollbruchstellen, Ausschnitte oder dergleichen, die zur Kabeleinführung und -abführung dienen, auch in dem als offenem Dosenkörper ausgebildeten Hilfsrahmen vorgesehen sind, damit entsprechende Kabelanschlüsse und dergleichen in das Innere des offenen Dosenkörpers geführt werden können. Bei einem offenen ringförmigen Hilfsrahmen ist eine Öffnung um Zuführen von Kabeln oder dergleichen ohnehin vorhanden.

Eine unter Umständen bevorzugte Weiterbildung wird darin gesehen, dass die Gegenlagerfläche in Form des umlaufenden Mündungsrandes aneinander gegenüberliegenden Bereichen oder zumindest an einem Randbereich Sollbruchstellen aufweist, an denen der Mündungsrand zur Erzeugung einer tangential gerichteten oder als Sekante ausgebildeten flachen Randkante abbrechbar ist.

Diese Ausgestaltung dient dazu, eine enge Anlage von nebeneinander installierten Installationsdosen zu ermöglichen, die an sich kreisrunden Querschnitt aufweisen. Durch die Abflachung ist es möglich, die benachbarten Dosen mit der durch die Abflachung erzeugten Fläche aneinander zu führen, sodass der Standard-Einbauabstand erreicht werden kann.

Gemäß der im Anspruch 1 angegebenen Ausgestaltung ist der entsprechende Tragring hinsichtlich seiner Bemessung und geometrischen Ausgestaltung so ausgebildet, dass er zwängungsfrei in die Installationsdose eingefügt werden kann.

Insbesondere ist bevorzugt vorgesehen, dass der Dosenkörper in der Einbausolllage von einer Abdeckplatte überdeckt ist, in die elektrische Schaltelemente integriert sind oder die Durchgriffe für Schalter, Tastschalter, Steckdosen oder dergleichen Teile von elektrischen Installationsgeräten aufweist, wobei die Abdeckplatte vorzugsweise am Tragring oder an einem eingebauten Installationsgerät lösbar befestigt ist, z.B. mittels Rasten oder Schrauben.

Ausführungsbeispiele der Erfindung sind in der Zeichnung dargestellt und im Folgenden näher beschrieben:
Es zeigt:

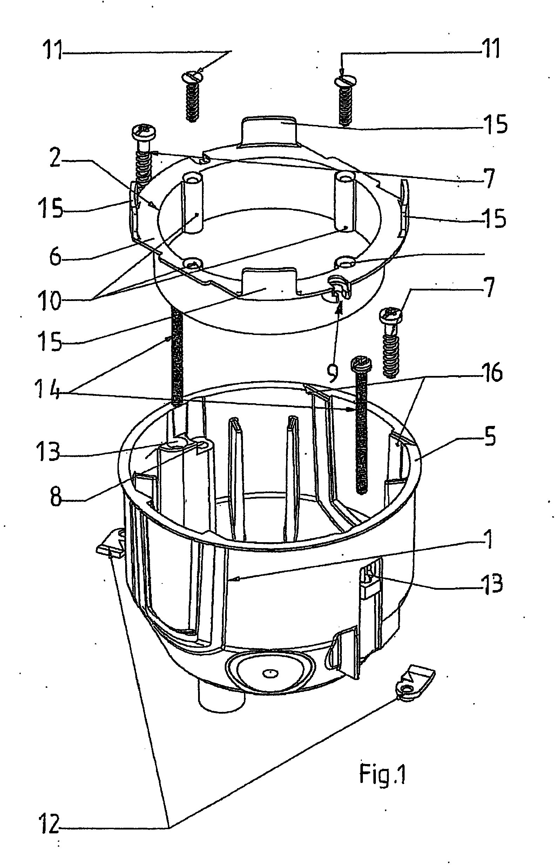

- Figur 1: wesentliche Bestandteile einer erfindungsgemäßen Installationsdose in Explosionsdarstellung;

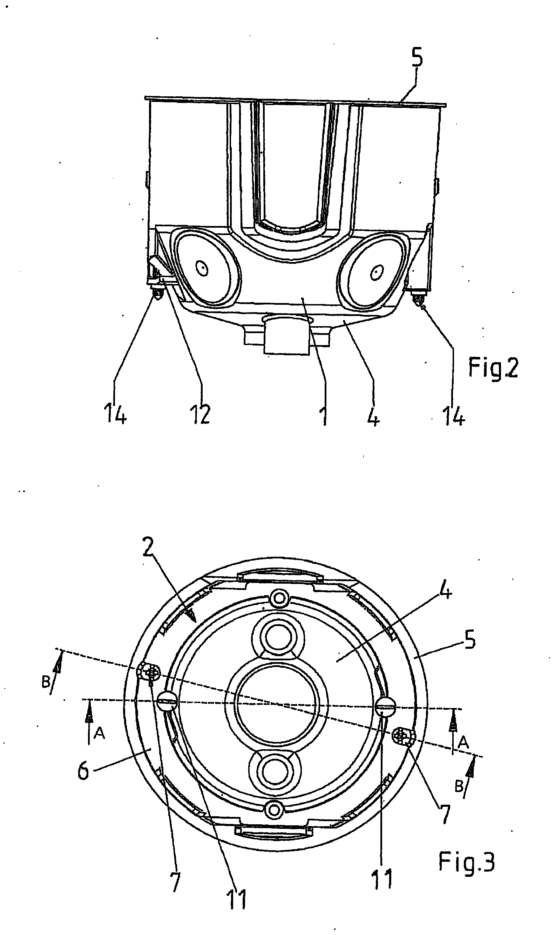

- Figur 2: die Installationsdose im Zusammenbau in Seitenansicht;
- Figur 3: desgleichen in Draufsicht gesehen;

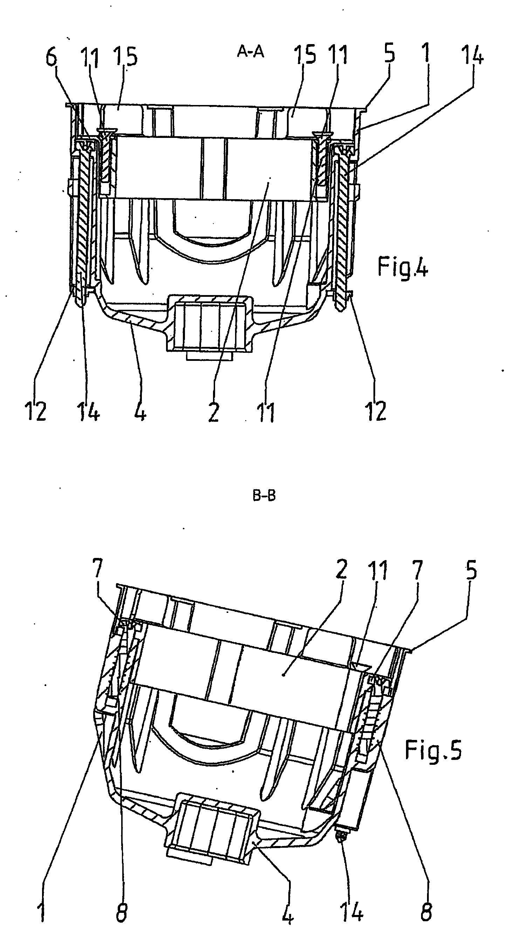

- Figur 4: eine Ansicht entlang Schnittlinie A-A der Figur 3 gesehen;
- Figur 5: eine Ansicht entlang Schnittlinie B-B der Figur 3 gesehen;
- Figur 6: eine Variante einer erfindungsgemäßen Installationsdose von schräg vorn gesehen;
- Figur 7: desgleichen in Mittellängsschnitt gesehen;
- Figur 8: dergleichen mit unterschiedlicher Einbautiefe des Hilfsrahmens;

In der Zeichnung ist eine Installationsdose für elektrotechnische Zwecke zum Einbau in eine Öffnung einer Wand mit einem mündungsseitig offenen Dosenkörper 1 gezeigt. Erfindungsgemäß ist in den Dosenkörper 1 ein Hilfsrahmen 2 eingesetzt, der die Aufnahme und Halterung für ein in den Dosenkörper 1 einbaubares Installationsgerät und/oder einen Tragring 3 für ein Installationsgerät bildet. Der Hilfsrahmen 2 ist mit seinem zur Mündung des Dosenkörpers 1 gerichteten Endbereich in der Einbausolllage so ausgerichtet, dass er hinter der Mündungsebene des Dosenkörpers 1 zurückliegt, wie in den Zeichnungsfiguren gezeigt ist.

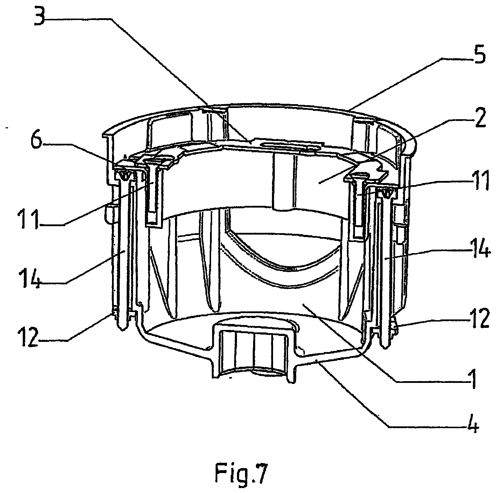

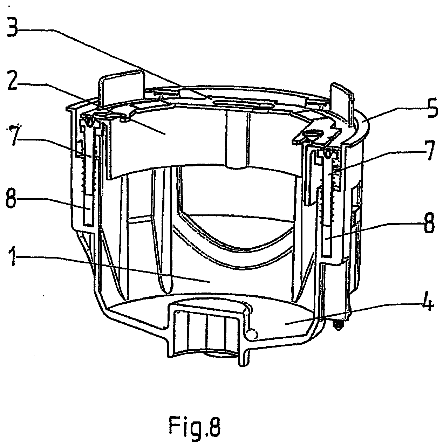

Insbesondere ist der Hilfsrahmen 2 im Dosenkörper 1 in Richtung auf einen Boden 4 des Dosenkörpers 1 bzw. in Richtung zur Mündung des Dosenkörpers 1 verstellbar und in unterschiedlichen Positionen feststellbar gehalten, wie insbesondere in Figur 7 und 8 veranschaulicht ist. Im Ausführungsbeispiel weist der Dosenkörper 1 der Installationsdose kreisrunden Querschnitt auf, wobei der Dosenkörper zylindrisch mit umlaufendem Mantel ausgebildet ist. Mündungsseitig weist der Dosenkörper 1 quer zu seiner Längserstreckung gerichtete, nach außen abragende Gegenlagerflächen 5 auf, die vorzugsweise als mündungsseitig außen umlaufender Kragen ausgebildet sind, wie in den Figuren gezeigt ist. Der Mantel des Dosenkörpers 1 und/oder dessen Boden 4 können ausbrechbare oder durchstoßbare Bereiche aufweisen, die zum Einführen und Abführen von Kabeln oder Installationsrohren dienen.

Der Hilfsrahmen 2 ist als Ringkörper ausgebildet, von dem am der Mündung des Dosenkörpers 1 zugwandten Endbereich ein Kragen 6 quer nach außen abragt. An dem Hilfsrahmen 2 sind Stellmittel 7 gehalten, die mit Stellmittelaufnahmen 8 am Innenmantel des Dosenkörpers 1 in Eingriff sind und mittels derer die Verstellung und Feststellung in unterschiedlichen Positionen realisiert ist. Im Ausführungsbeispiel sind die Stellmittel 7 Kopfschrauben, die drehbar, aber axial unverstellbar gehalten sind. Deren Gewindeschaft ist jeweils in einen Kanal der Stellmittelaufnahme 8 am Innenmantel der Installationsdose eingeschraubt. Die Schrauben bzw. Stellmittel 7 nehmen jeweils den Hilfsrahmen 2 mit, sodass dieser gegenüber dem Dosenkörper verstellt wird. Auch kann der Kopf der Kopfschrauben jeweils in einem am Außenmantel des Hilfsrahmens 2 ausgebildeten Käfig 9 drehbar aber axial unverschieblich gehalten sein.

Ferner weist der Hilfsrahmen 2 am Innenmantel Kanäle 10 auf, die parallel zu einer Mittellängsachse des Hilfsrahmens 2 ausgerichtet und ausgebildet sind, wobei Haltemittel 11, insbesondere Kopfschrauben, in diese einschraubbar oder eingeschraubt sind, mittels derer ein Installationsgerät oder ein Tragring 3, der ein Installationsgerät hält, am Hilfsrahmen 2 befestigbar ist.

Im Ausführungsbeispiel ist die Installationsdose als Hohlwanddose ausgebildet, an deren Mantel ein- und ausschwenkbare Laschen 12 angeordnet sind, die mittels in Kanäle 13 des Dosenkörpers 1 eingesetzter Laschenschrauben 14 betätigbar sind, also aus der eingeschwenkten Lage, in der sie hinter dem Umfang des Dosenmantels zurückliegen, in eine ausgeschwenkte Befestigungslage bewegbar sind und in der ausgeschwenkten Lage längs des Mantels in Richtung zu dessen Mündung hin verstellbar sind.

Am Hilfsrahmen 2 sind zusätzlich an seiner zur Mündung weisenden Seite parallel zur Stellrichtung vorragende Stege 15 ausgebildet, die eine Montagehilfe für den Monteur bilden, damit dieser den korrekten Abstand des Hilfsrahmens 2 von der Außenfläche der Wandung optisch erkennen kann, in die die Installationsdose eingesetzt ist.

Der Dosenkörper 1 weist im Bereich seiner umlaufenden Gegenlagerfläche 5 an einander gegenüberliegenden Bereichen oder mindestens einem Bereich Sollbruchstellen 16 auf, an denen der Mündungsrand zur Erzeugung einer tangential gerichteten oder als Sekante ausgebildeten flachen Randkante abbrechbar ist. Dies dient dazu, den Standard-Einbauabstand von nebeneinander angeordneten Installationsdosen zu erreichen.

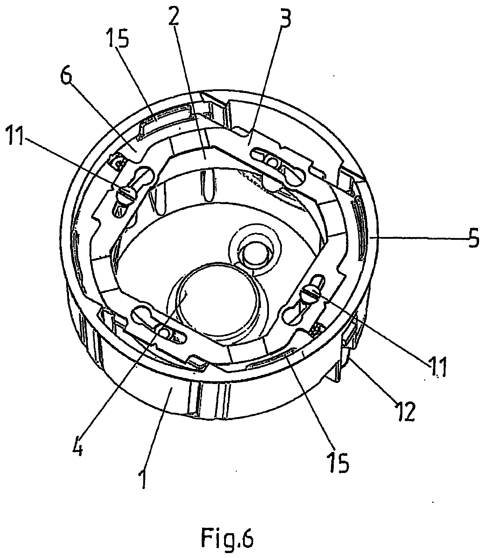

Wie insbesondere den Figuren 6 bis 8 zu entnehmen ist, ist in die Installationsdose bzw. den Dosenkörper 1 ein dessen Innenabmessung bzw. Innendurchmesser angepasster Tragring 3 eingesetzt, der auf der Mündung des Hilfsrahmens 2, insbesondere dessen Kragen 6, aufliegt.

Der Tragring 3 kann in an sich bekannter Weise mit einem Installationsgerät verbunden sein, beispielsweise einem Schalter, Tastschalter, einer Steckdose oder anderen elektrischen Installationsgeräten.

Die Erfindung ermöglicht es in einfacher Weise, die in dem Dosenkörper 1 der Installationsdose eingebauten Elemente mittels des Hilfsrahmens 2 in gewünschter Höhe so auszurichten, dass anschließend eine überstandsfreie Anordnung gegenüber der Außenfläche der Einbauwand erreicht ist, sodass eine auf dieser Einheit befestigten Abdeckung oder Blende im Wesentlichen flächenbündig in der Fläche der Einbauwand liegt. Die Abdeckung oder Blende kann Durchgriffe für Schalter, Stecker oder dergleichen aufweisen. Sie kann auch als Sensorfläche ausgebildet sein oder Sensoren können in sich eingebettet sein.

## Patentansprüche

1. Elektrotechnische Installationsdose zum Einbau in eine Wand mit einem mündungsseitig offenen Dosenkörper (1), wobei ein Hilfsrahmen (2) angeordnet ist, der die Aufnahme und Halterung für ein in den Dosenkörper (1) einbaubares Installationsgerät und/oder einen Tragring (3) dafür ist, wobei der Hilfsrahmen (2) in Richtung auf einen Boden (4) des Dosenkörpers (1) und in Richtung zur Mündung des Dosenkörpers (1) verstellbar und in unterschiedlichen Positionen feststellbar gehalten ist, **dadurch gekennzeichnet, dass** der Hilfsrahmen (2) in dem Dosenkörper (1) gehalten ist, dass in den Dosenkörper (1) ein dessen Innenabmessung oder Innendurchmesser angepasster Tragring (3) eingesetzt ist, der auf der Mündung des Hilfsrahmens (2) oder dessen Kragen (6) aufliegt, und dass am Hilfsrahmen (2) Stellmittel (7) gehalten sind, die mit Stellmittelaufnahmen (8) am Innenmantel des Dosenkörpers (1) in Eingriff sind und mittels derer die Verstellung und Feststellung in unterschiedlichen Positionen realisiert ist, wobei die Stellmittel (7) Kopfschrauben sind.

2. Installationsdose nach Anspruch 1, **dadurch gekennzeichnet, dass** der Dosenkörper (1) kreisrunden Querschnitt hat oder dass der Dosenkörper (1) zylindrisch mit umlaufendem Mantel ausgebildet ist.

3. Installationsdose nach einem der Ansprüche 1 oder 2, **dadurch gekennzeichnet, dass** der Dosenkörper (1) mündungsseitig quer zu seiner Längserstreckung nach außen abragende Gegenflächen (5) aufweist, die in Einbausolllage an der Wandaußenseite neben der Einbauöffnung anliegen, oder dass der Dosenkörper (1) mündungsseitig außen umlaufend als Gegenlagerfläche (5) einen Kragen oder Flanschrand aufweist.

4. Installationsdose nach einem der Ansprüche 1 bis 3, **dadurch gekennzeichnet, dass** der Hilfsrahmen (2) als Ringkörper ausgebildet ist, von dem am der Mündung des Dosenkörpers (1) zugewandten Endbereich ein Kragen (6) quer nach außen abragt.

5. Installationsdose nach Anspruch 1, **dadurch gekennzeichnet, dass** der Kopf der als Kopfschrauben ausgebildeten Stellmittel (7) jeweils vorzugsweise in einem am Außenmantel des Hilfsrahmens (2) ausgebildeten Käfig (9) drehbar, aber axial unverstellbar gehalten ist und deren Gewindeschaft in einen die Stellmittelaufnahme (8) bildenden Kanal am Innenmantel des Dosenkörpers (1) eingeschraubt ist.

6. Installationsdose nach einem der Ansprüche 1 bis 5, **dadurch gekennzeichnet, dass** der Hilfsrahmen (2) am Innenmantel Kanäle (10), die parallel zu einer Mittellängsachse des Hilfsrahmens (2) ausgerichtet sind, aufweist, und dass Haltemittel (11), insbesondere Kopfschrauben, in diese einschraubbar oder eingeschraubt sind, mittels derer ein Installationsgerät oder ein Tragring (3), der ein Installationsgerät hält, am Hilfsrahmen (2) befestigt oder befestigbar ist.

7. Installationsdose nach einem der Ansprüche 1 bis 6, **dadurch gekennzeichnet, dass** der Dosenkörper (1) als Hohlwanddose ausgebildet ist, an deren Mantel ein- und ausschwenkbare Laschen (12) angeordnet sind, die mittels in Kanäle (13) des Dosenkörpers (1) eingesetzter Laschenschrauben (14) betätigbar und in ausgeschwenkter Lage längs des Mantels in Richtung zur Mündung verstellbar sind.

8. Installationsdose nach einem der Ansprüche 1 bis 7, **dadurch gekennzeichnet, dass** am Hilfsrahmen (2) an seiner zur Mündung weisenden Seite parallel zur Stellrichtung mindestens ein vorragender Steg (15) angeordnet ist.

9. Installationsdose nach einem der Ansprüche 1 bis 8, **dadurch gekennzeichnet, dass** der Hilfsrahmen (2) als mündungsseitig offener Dosenkörper ausgebildet ist.

10. Installationsdose nach einem der Ansprüche 4 bis 9, **dadurch gekennzeichnet, dass** die Gegenlagerfläche (5) in Form des umlaufenden Mündungsrandes an einander gegenüberliegenden Bereichen oder zumindest an einem Randbereich Sollbruchstellen (16) aufweist, an denen der Mündungsrand zur Erzeugung einer tangential gerichteten oder als Sekante ausgebildeten flachen Randkante abbrechbar ist.

11. Installationsdose nach einem der Ansprüche 1 bis 10, **dadurch gekennzeichnet, dass** der Dosenkörper (1) in der Einbausolllage von einer Abdeckplatte überdeckt ist, in die elektrische Schaltelemente integriert sind oder die Durchgriffe für Schalter, Tastschalter, Steckdosen oder dergleichen Teile von elektrischen Installationsgeräten aufweist, wobei die Abdeckplatte vorzugsweise am Tragring (3) oder an einem eingebauten Installationsgerät lösbar befestigt ist, z.B. mittels Rasten oder Schrauben.

## Claims

1. An electrical installation socket for installation in a wall, comprising a socket body (1) with an open mouth, with an auxiliary frame (2) being arranged that is the receptacle and holder for an installation device to be mounted in the socket body (1) and/or a carrying ring (3) therefor, the auxiliary frame (2) being adjustable in a direction towards a bottom (4) of the socket body (1) and in a direction towards the mouth of the socket body (1), and being lockably held in different positions, **characterized by that** the auxiliary frame (2) is held in the socket body (1), that in the socket body (1) a carrying ring (3) adapted to the inner dimension or inner diameter thereof is fitted, said carrying ring being placed on the mouth of the auxiliary frame (2) or collar (6) thereof, and that at the auxiliary frame (2) adjusting means (7) are held that are in engagement with adjusting means receptacles (8) at the inner shell of the socket body (1) and by means of which the adjustment and the locking in different positions is achieved, the adjusting means (7) being head screws.

2. The electrical installation socket according to claim 1, **characterized by that** the socket body (1) has a circular cross-section or that the socket body (1) is cylindrical with a circumferential shell.

3. The electrical installation socket according to one of claims 1 or 2, **characterized by that** the socket body (1) has at its mouth transversely to its longitudinal extension outwardly projecting counter faces (5) that, in the intended mounting position, bear against the wall outside adjacent to the installation opening, or that the socket body (1) has at its mouth an externally circumferential collar or flange edge as a counter bearing surface (5).

4. The electrical installation socket according to one of claims 1 to 3, **characterized by that** the auxiliary frame (2) is configured as an annular body, from which at the end section facing the mouth of the socket body (1) a collar (6) is outwardly and transversely projecting.

5. The electrical installation socket according to claim 1, **characterized by that** the head of the adjusting means (7) configured as head screws is preferably held rotatable in a cage (9) formed at the outer shell of the auxiliary frame (2), but in an axially non-adjustable manner, and the threaded shaft thereof is screwed into a channel forming the adjusting means receptacle (8) at the inner shell of the socket body (1).

6. The electrical installation socket according to one of claims 1 to 5, **characterized by that** the auxiliary frame (2) includes, at the inner shell, channels (10) that are oriented in parallel to a central longitudinal axis of the auxiliary frame (2), and that holding means (11), in particular head screws, can be or are screwed therein, by means of which an installation device or a carrying ring (3) holding an installation device is attached or can be attached at the auxiliary frame (2).

7. The electrical installation socket according to one of claims 1 to 6, **characterized by that** the socket body (1) is designed as a hollow wall socket, at the shell of which flaps (12) to be folded in and out are arranged that can be operated by means of fish bolts (14) fitted in channels (13) of the socket body (1) and that, in the folded-out position, can be adjusted along the shell in a direction towards the mouth.

8. The electrical installation socket according to one of claims 1 to 7, **characterized by that** at the auxiliary frame (2), at its side facing the mouth, at least one protruding web (15) is arranged in parallel to the direction of adjustment.

9. The electrical installation socket according to one of claims 1 to 8, **characterized by that** the auxiliary frame (2) is designed as a socket body with an open mouth.

10. The electrical installation socket according to one of claims 4 to 9, **characterized by that** the counter bearing surface (5) in the form of the circumferential mouth edge includes, at opposing sections or at least it an edge area, predetermined breaking points (16) where the mouth edge can be broken for forming a flat edge that is tangentially oriented or designed as a secant.

11. The electrical installation socket according to one of claims 1 to 10, **characterized by that** the socket body (1), in the intended mounting position, is covered by a cover plate, in which the electrical switching elements are integrated or that includes the operating elements for switches, buttons, sockets or the like parts of electrical installation devices, the cover plate preferably being releasably attached at the carrying ring (3) or at an integrated installation device, e.g., by means of catches or screws.

## Revendications

1. Boîtier d'installation électrotechnique pour l'installation dans une paroi, comprenant un corps de boîtier (1) à embouchure ouverte, avec un cadre auxiliaire (2) installé qui est le logement et support pour un dispositif d'installation à être monté dans le corps de boîtier (1) et/ou un anneau support (3) pour cela, le cadre auxiliaire (2) étant réglable en direction vers un fond (4) du corps de boîtier (1) et en direction vers l'embouchure du corps de boîtier (1), et étant retenu de façon blocable dans des positions différentes, **caractérisé en ce que** le cadre auxiliaire (2) est retenu dans le corps de boîtier (1), que dans le corps de boîtier (1) un anneau support (3) adapté à la dimension intérieure ou le diamètre intérieur de celui-ci est inséré, cet anneau support étant positionné sur l'embouchure du cadre auxiliaire (2) ou le collier (6) de celui-ci, et qu'au cadre auxiliaire (2) des moyens de réglage (7) sont retenus qui sont engagés dans des logements (8) des moyens de réglage à l'enveloppe intérieure du corps de boîtier (1) et au moyen desquels le réglage et le blocage dans des positions différentes est réalisé, les moyens de réglage (7) étant des vis à tête.

2. Boîtier d'installation électrotechnique selon la revendication 1, **caractérisé en ce que** le corps de boîtier (1) est de section circulaire ou que le corps de boîtier (1) est cylindrique avec une enveloppe circonférentielle.

3. Boîtier d'installation électrotechnique selon une des revendications 1 ou 2, **caractérisé en ce que** le corps de boîtier (1) a à son embouchure transversalement à son étendue longitudinale des contre-surfaces (5) faisant saillie vers l'extérieur qui, dans la position de montage de consigne, sont en appui contre l'extérieur de la paroi à côté de l'ouverture d'installation, ou que le corps de boîtier (1) a à son embouchure à l'extérieur un collier circonférentiel ou une arête de bride comme contre-surface de support (5).

4. Boîtier d'installation électrotechnique selon une des revendications 1 à 3, **caractérisé en ce que** le cadre auxiliaire (2) est réalisé comme corps annulaire, à partir duquel à la partie d'extrémité dirigée vers l'embouchure du corps de boîtier (1) un collier (6) fait saillie transversalement vers l'extérieur.

5. Boîtier d'installation électrotechnique selon la revendication 1, **caractérisé en ce que** la tête des moyens de réglage (7) réalisés en forme de vis à tête de préférence est retenue en rotation, mais de façon non réglable axialement dans une cage (9) réalisée à l'enveloppe extérieure du cadre auxiliaire (2), et la tige filetée desquels est vissée dans un canal formant le logement (8) des moyens de réglage à l'enveloppe intérieure du corps de boîtier (1).

6. Boîtier d'installation électrotechnique selon une des revendications 1 à 5, **caractérisé en ce que** le cadre auxiliaire (2) comporte, à l'enveloppe intérieure, des canaux (10) qui sont orientés en parallèle à un axe longitudinal central du cadre auxiliaire (2), et que des moyens de retenue (11), en particulier des vis à tête, peuvent être ou sont vissés là-dedans, au moyen desquels un dispositif d'installation ou un anneau support (3) portant un dispositif d'installation est attaché ou peut être attaché au cadre auxiliaire (2).

7. Boîtier d'installation électrotechnique selon une des revendications 1 à 6, **caractérisé en ce que** le corps de boîtier (1) est réalisé comme boîtier pour des parois creuses, à l'enveloppe duquel des pattes (12) à être repliées et déployées sont montées qui peuvent être actionnées au moyen de boulons d'éclisse (14) insérés dans des canaux (13) du corps de boîtier (1) et qui, dans position déployée, peuvent être réglés le long de l'enveloppe en direction vers l'embouchure.

8. Boîtier d'installation électrotechnique selon une des revendications 1 à 7, **caractérisé en ce qu'**au cadre auxiliaire (2), à son côté dirigé vers l'embouchure, au moins une entretoise en saillie (15) est disposée en parallèle à la direction de réglage.

9. Boîtier d'installation électrotechnique selon une des revendications 1 à 8, **caractérisé en ce que** le cadre auxiliaire (2) est réalisé comme corps de boîtier à embouchure ouverte.

10. Boîtier d'installation électrotechnique selon une des revendications 4 à 9, **caractérisé en ce que** la contre-surface de support (5) en forme du bord de l'embouchure circonférentielle comporte, à des zones opposées ou au moins à une zone de bord, des points de rupture théorique (16) prédéterminés, où le bord de l'embouchure peut être rompu pour former un bord plat orienté tangentiellement ou réalisé comme sécante.

11. Boîtier d'installation électrotechnique selon une des revendications 1 à 10, **caractérisé en ce que** le corps de boîtier (1), dans la position de montage de consigne, est recouvert d'une plaque de couverture, dans laquelle les éléments de commutation électriques sont intégrés ou qui comporte les éléments de commande pour des commutateurs, boutons-poussoirs, prises de courant ou semblables parties de dispositifs d'installation électriques, la plaque de couverture de préférence étant montée amovible à l'anneau support (3) ou à un dispositif d'installation intégré, p.ex., au moyen de crans ou vis.
